# EUROPEAN PATENT APPLICATION

(11) **EP 3 239 569 A1**
(43) Date of publication of application: **01.11.2017**
(21) Application number: 17176288.3
(22) Date of filing: 24.10.2014
(51) Int. Cl.: F16K 11/048

(54) **THREE-WAY VALVE FOR FLOW MIXING AND FLOW DIVISION**

(30) Priority: 31.12.2013 CN 201310751251
(62) Divisional of application: 14190226.2
(71) Applicant: Danfoss A/S, 6430 Nordborg (DK)
(72) Inventor: GAO, YU, 6430 Nordborg (DK); WENG, Liang, 6430 Nordborg (DK); ZANG, Qi, 6430 Nordborg (DK)
(74) Representative: Stevens, Brian

(57) **Abstract**

The present invention provides a three-way valve for flow mixing and flow division. The three-way valve includes: a valve cover, where the bottom of the valve cover is provided with a first port connected to a valve cavity of the three-way valve; and a valve body, where the valve body is connected to the valve cover in a sealed manner and is provided above the valve cover, and left and right sides of the valve body are provided with a second port and a third port that are connected to the valve cavity. The three-way valve further includes: a valve core component, where the valve core component is connected to the valve cover in a fixed manner; a valve seat component, where the valve seat component is provided inside the valve cavity and is capable of fitting with the valve core component; and a valve rod component, where the valve rod component is connected to the valve seat component, and drives the valve seat component to move up and down in the valve cavity, so as to implement a flow rate variation, and opening and closing of the three-way valve.

## Description

### BACKGROUND

### Technical Field

The present invention relates to district heating, the petrochemical industry, the water processing industry, and the metallurgical industry, and in particular, to a three-way valve for implementing flow mixing and flow division and used in the foregoing application fields.

### Related Art

Currently, in a three-way valve in the prior art, flow mixing and flow division functions are implemented by changing an inner component of the valve. Changing an inner component of a valve is usually very troublesome, which is not beneficial for a client to use the valve.

Besides, a conventional three-way valve uses many driving apparatuses, and therefore, a driving force is reduced. To meet a requirement for strong flow resistance, the driving force usually needs to be increased. An increase in the driving force increases a parameter of an electric driving apparatus; consequently, the conventional three-way valve finally loses competitiveness on the market.

In addition, the size of the three-way valve is also increased, so as to increase a movement space and the like of a lower valve core to avoid a direct impact on a valve core by a medium or reducing the driving force. However, a large space is occupied, which causes inconvenience in installation and use.

In view of this, it is necessary to provide a new three-way valve that at least can partially solve the foregoing problems.

### SUMMARY

An objective of the present invention is to solve at least one aspect of the foregoing problems and disadvantages that exist in the prior art.

One objective of the present invention is to provide a three-way valve, which can implement flow mixing and flow division functions without changing any component.

One objective of the present invention is to provide a three-way valve, which can reduce flow resistance.

Another objective of the present invention is to provide a three-way valve, which has a compact structure and saves an installation space.

In one aspect of the present invention, a three-way valve for flow mixing and flow division is provided, and the three-way valve includes:
a valve cover, where the bottom of the valve cover is provided with a first port connected to a valve cavity of the three-way valve; and
a valve body, where the valve body is connected to the valve cover in a sealed manner and is provided above the valve cover, and left and right sides of the valve body are provided with a second port and a third port that are connected to the valve cavity. The three-way valve further includes:
   a valve core component, where the valve core component is connected to the valve cover in a fixed manner;
   a valve seat component, where the valve seat component is provided inside the valve cavity and is capable of fitting with the valve core component; and
   a valve rod component, where the valve rod component is connected to the valve seat component, and drives the valve seat component to move up and down in the valve cavity, so as to implement a flow rate variation, and opening and closing of the three-way valve.

Specifically, the valve core component includes an upper valve core, a lower valve core, and a valve core connector connecting the upper valve core and the lower valve core.

Specifically, the three-way valve further comprises a support rod, where one end of the support rod is connected to a ring-shaped boss provided at the center of the lower valve core, and the other end is connected to a support member of the valve cover in a fixed manner.

Specifically, the ring-shaped boss is provided with an inner thread so as to be connected to a thread at one end of the support rod, the other end of the support rod is fixed on a support rib of the valve cover, and the support rib is provided with a fan-shaped flow channel opening for a medium to pass through.

Specifically, the valve seat component includes an upper valve seat and a lower valve seat that are connected to each other by using a connecting rod, and the upper valve seat and the lower valve seat are separately located above and below the valve core component.

Specifically, the connecting rod and the lower valve seat are connected by means of screw-thread fit, and the connecting rod and the upper valve seat are fastened by using a fastening nut.

Specifically, an inner side of an outer surface of the connecting rod contacts an outer edge of the valve core connector.

Specifically, an outer circumference of the valve core connector is provided with a semi-circular hole fitting with an inner surface of the connecting rod.

Specifically, quantities of the connecting rods and the semi-circular holes are both 6.

Specifically, the upper valve seat is connected to a valve rod in the valve rod component by using a connecting plate, and seal surfaces of the connecting plate and the upper valve seat are sealed by using a non-asbestos pad.

Specifically, the connecting plate is provided with a fan-shaped flow channel opening for a medium to pass through, the center of the connecting plate is provided with a through-hole, and after the valve rod penetrates the through-hole, a nut is used to fit with a thread at an end of the valve rod to implement fastening.

Specifically, two ends of the valve core connector are each provided with a groove, a seal ring is provided inside the groove, the upper valve core and the lower valve core are separately connected to the valve core connector in a threaded manner and tightly press an inner ring of the seal ring, an outer ring of the seal ring is exposed, and when the upper valve seat or the lower valve seat moves to press and be joined with the outer ring of the seal ring, the corresponding first port or second port is closed in a sealed manner.

Specifically, the seal ring is an O-shaped seal ring or an X-shaped seal ring.

Specifically, a partition plate of the valve body component and an inner wall of the valve cover are sealed by using a first O-shaped seal ring.

Specifically, a connection position between the partition plate and the inner wall is provided with a guiding groove, and a guiding ring is mounted inside the guiding groove.

Specifically, at a top end of the valve rod, a stuffing box and an insertion member that are connected by using a thread are sequentially provided between the valve body and the valve rod.

Specifically, seal surfaces of the stuffing box and the insertion member are provided with a second O-shaped seal ring, and a copper pad is provided inside the insertion member.

Specifically, outer contours of the upper valve core are formed such that a flow curve of the second port is a logarithmic curve, and/or outer contours of the lower valve core are formed such that a flow curve of the first port is a linear curve.

It can be known from the foregoing that the three-way valve provided in the present invention at least achieves the following beneficial technical effects: (1) flow mixing and flow division functions can be implemented by a single valve without changing any component, (2) a client installs and uses the valve more easily, and an installation space is saved, and (3) a structure design is simple, and a manufacturing cost is low.

### BRIEF DESCRIPTION OF THE DRAWINGS

These and/or other aspects and advantages of the present invention will become clear and easy to understand through the following description about preferred embodiments with reference to the accompanying drawings, where:
FIG. 1 is a sectional view of a three-way valve for flow mixing and flow division according to an embodiment of the present invention;
FIG. 2 is an enlarged schematic diagram of an example of a valve core component shown in FIG. 1;
FIG. 3 is an enlarged schematic diagram of another example of a valve core component shown in FIG. 1; and
FIG. 4 is a top view of a valve core connector in a valve core component shown in FIG. 1.

### DETAILED DESCRIPTION

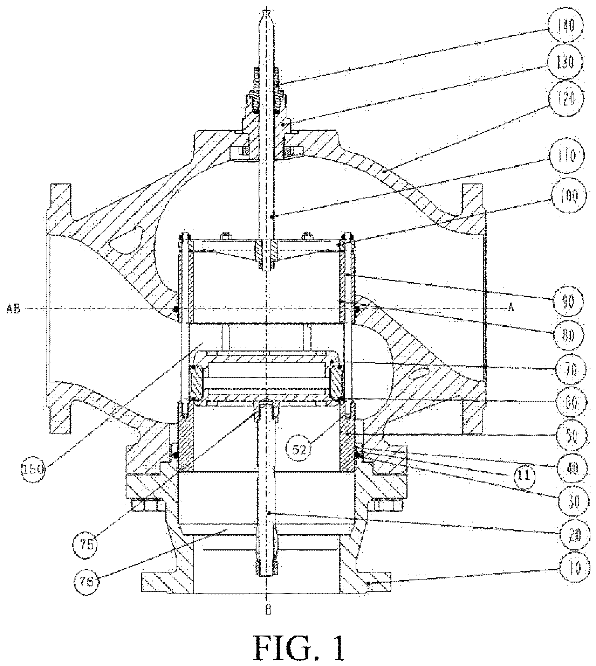

Technical solutions of the present invention are described in further detail through the following embodiments and with reference to FIG. 1 to FIG. 4. In this specification, same or similar reference numerals indicate same or similar components. The following description of implementation manners of the present invention with reference to the accompanying drawings is intended to explain the general invention conception of the present invention, and should not be construed as a limitation to the present invention.

As shown in FIG. 1, a three-way valve for flow mixing and flow division provided in an embodiment of the present invention sequentially includes the following components from bottom to top: a valve cover 10, a valve body 120, and a valve rod component. A support rod 20, valve seat components 50 and 80, and a valve core component 70 are sequentially provided from bottom to top inside a valve cavity 150 of the three-way valve. The bottom of the valve cover 10 is provided with a port B connected to the valve cavity 150 of the three-way valve. The valve body 120 extends along a left-right direction of a page where FIG. 1 is shown. The valve body 120 is connected to the valve cover 10 in a sealed manner and is provided above the valve cover 10. As shown in FIG. 1, left and right sides of the valve body 120 are separately provided with a port AB and a port A that are connected to the valve cavity 150. The valve core component 70 is connected to the valve cover 10 in a fixed manner. The valve seat components 50 and 80 are connected to one end of the valve rod component, and are driven by the valve rod component to move up and down inside the valve cavity 150, so as to connect with or disconnect from the valve core component, thereby finally implementing a flow rate variation, and opening and closing of the three-way valve.

When a medium flows from the port A and the port B to the three-way valve, as shown in FIG. 1, the medium at the port A reaches a maximum flow rate, the port B is in a closing state, and after passing through the valve cavity 150, the medium flows out from the port AB. When the valve seat components 50 and 80 move downwards, the port B gradually opens, and the port A gradually closes. This process implements a function of medium mixing or flow mixing. When the medium flows from the port AB to the three-way valve, as shown in FIG. 1, the medium at the port A reaches the maximum flow rate, and the port B is in a closing state. When the valve seat components 50 and 80 move downwards, the port B gradually opens, and the port A gradually closes. When the valve seat components 50 and 80 move downwards by the greatest stroke, the port A closes, and a flow rate at the port B reaches a maximum value. In this process, the three-way valve implements a function of medium separation or flow division.

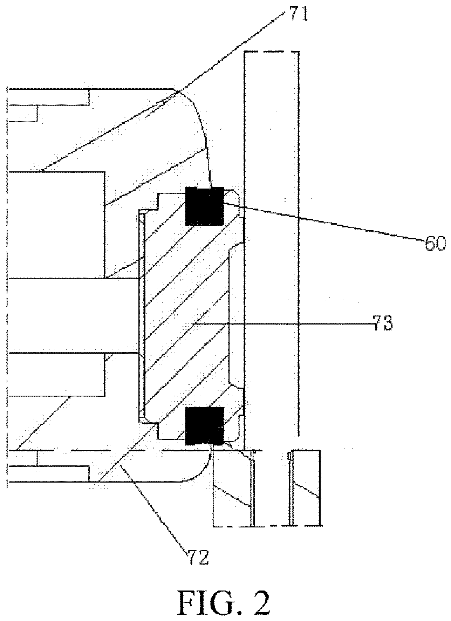

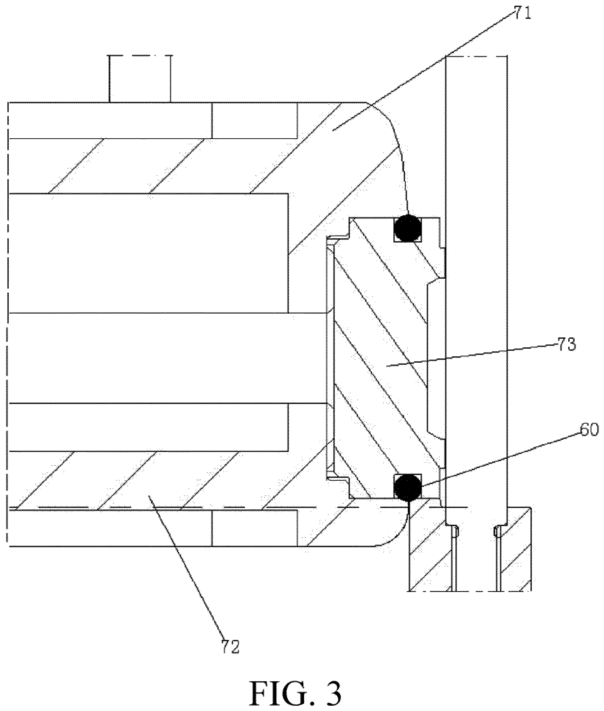

As shown in FIG. 2 and FIG. 3, the valve core component 70 includes an upper valve core 71, a lower valve core 72, and a valve core connector 73 connecting the upper valve core 71 and the lower valve core 72. One end of the support rod 20 is connected to a guiding hole 75 provided at the center of the lower valve core 72, and a step portion is provided inside the guiding hole 75 to fit with a protrusion at an upper end of the support rod 20. It can be seen that the guiding hole 75 enables the lower valve core 72, the support rod 20, and the valve cover 10 to meet a requirement of keeping coaxial. The other end of the support rod 20 is connected to a support member, such as a support rib 76, of the valve cover 10 in a fixed manner. The guiding hole 75 is provided with an inner thread so as to be connected to a thread at one end of the support rod 20, the other end of the support rod 20 is fixed on the support rib 76 of the valve cover 10, and the support rib 76 is provided with a fan-shaped flow channel opening (not shown) for a medium to pass through. In an embodiment, three support ribs 76 may be provided, and correspondingly, three fan-shaped flow channel openings are formed.

Certainly, a fixed connection manner of the valve core component 70 and the valve cover 10 is not limited to the foregoing description, and a person skilled in the art may perform specific setting as needed.

Referring to FIG. 2 and FIG. 3, upper and lower ends of the valve core connector 73 are each provided with a groove (not shown). A seal ring 60 is provided inside the groove. The upper valve core 71 and the lower valve core 72 may be separately connected to the valve core connector 73 by using a thread and tightly press an inner ring of the seal ring 60, and an outer ring of the seal ring 60 is exposed. When the upper valve seat 80 or the lower valve seat 50 moves to press and be joined with the outer ring of the seal ring 60, the corresponding port A or port B is closed in a sealed manner. Specifically, FIG. 2 is a partially enlarged sectional view in which the seal ring 60 is set as an X-shaped seal ring. FIG. 3 is a partially enlarged sectional view in which the seal ring 60 is set as an O-shaped seal ring. Certainly, a person skilled in the art may further select a seal ring of another type as actually needed.

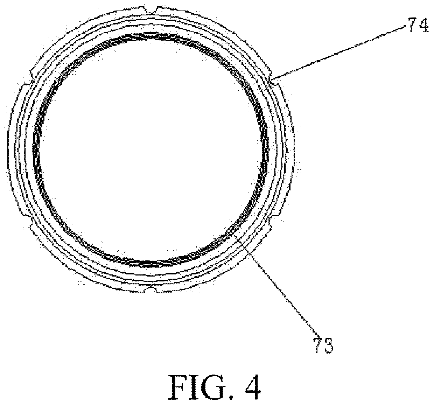

Referring to FIG. 1, the valve seat component includes an upper valve seat 80 and a lower valve seat 50 that are connected to each other by using a connecting rod 90, and the upper valve seat 80 and the lower valve seat 50 are separately located above and below the upper valve core 71 and the lower valve core 72 of the valve core component. It can be understood that when the upper valve seat 80 is joined with the upper valve core 71, the port A can be closed; and similarly, when the lower valve seat 50 is joined with the lower valve core 72, the port B can be closed. Specifically, an inner side of an outer surface of the connecting rod 90 contacts an outer edge of the valve core connector 73. Preferably, an outer circle or an outer circumference of the valve core connector 73 is provided with multiple (for example, six) semi-circular holes fitting with the connecting rod 90. As shown in FIG. 4, six semi-circular holes 74 having an equal space between each other are provided on the outer circle of the valve core connector 73 to accommodate a part of an inner surface of the connecting rod 90. It can be understood that in such deployment, when the valve core component 70 is impacted by a medium, the deployment can effectively prevent the valve core component 70 from shaking substantially.

Specifically, as shown in FIG. 1, to meet a location requirement of, for example, six connecting rods, and to achieve higher overall installation accuracy of the valve seat components 50 and 80, a lower end of the connecting rod 90 fits with a guiding hole 52 inside the valve seat 50. A step portion is provided inside the guiding hole 52, and is connected to the lower end of the connecting rod 90 by using a thread.

The valve rod component includes a valve rod 110, a stuffing box 140, and an insertion component 130. The upper valve seat 80 is connected to the valve rod 110 by using a connecting plate 100, and seal surfaces of the connecting plate 100 and the upper valve seat 80 are sealed by using a non-asbestos pad. The connecting plate 100 is provided with multiple (for example, three) fan-shaped flow channel openings for a medium to pass through. The center of the connecting plate 100 is provided with a through-hole, and after the valve rod 110 penetrates the through-hole, a nut is used to fit with a thread at an end of the valve rod 110 to implement fastening.

At a top end of the valve rod 110, the stuffing box 140 and the insertion part 130 that are connected by using a thread are sequentially provided between the valve body 120 and the valve rod 110. Seal surfaces of the stuffing box 140 and the insertion part 130 are provided with an O-shaped seal ring. Copper pads 130 are provided inside the insertion part 130, and can prevent the stuffing box 140 from becoming loose when the valve shakes.

A partition plate of the valve body 120 and an inner wall of the valve cover 10 are sealed by using an O-shaped seal ring 30, thereby ensuring better sealing. A guiding groove 11 is provided at a connection position between the partition plate and the inner wall, and a guiding ring 40 is mounted in the guiding groove 11. The guiding groove 11 has desirable guiding and lubricating functions, so that the lower valve seat 72 can move up and down vertically.

To achieve an objective of flow mixing and flow division, outer contours of the upper valve core 71 are formed such that a flow curve of the port A is a logarithmic curve, and outer contours of the lower valve core 72 are formed such that a flow curve of the port B is a linear curve. It can be understood that the foregoing setting is only an example of the present invention, and outer contours of the upper valve core and the lower valve core may also be configured in another manner.

Compared with the three-way valve in the prior art mentioned in the background of the present invention, the three-way valve in the present invention at least has one or more of the following advantages:
1) The three-way valve in the present invention can be used to mix and separate a medium. A user may select an installation manner in which the port A and the port B are mixing inlets or the port AB is a separation inlet as needed.
2) A valve body of the three-way valve in the present invention uses a valve body of a two-way valve in the prior art; therefore, the valve body has better replaceability.
3) Whether for medium separation or mixing, a structure of the three-way valve designed in the present invention reduces an impact of the medium on a valve rod by a maximum extent, thereby reducing a needed driving force. For example, when a liquid medium enters the valve body from the port AB, the valve rod and a valve seat are not directly impacted by the medium. Therefore, the needed driving force is relatively small, and the cost of a driving apparatus is relatively low. Besides, because a valve core component is connected to a valve cover in a fixed manner, the medium has a very small impact on a valve core.
4) When the three-way valve in the prior art is used for flow division, to prevent the medium from directly impacting or colliding with the valve core, and further impacting the valve rod, a lower valve core is usually set to be closer the port B (that is, a downside port) of the three-way valve. This requires the port B to have a large space to allow movement of the valve core. In comparison, because the valve core component is not connected to the valve rod in the present invention, impact of the medium on the valve core does not cause an increase in a driving force of the valve rod. A space of an inner cavity of the valve is efficiently used as a movement space of the valve seat. Therefore, an overall size of the three-way valve is relatively small, and an installation space is saved.

The foregoing is only some embodiments of the present invention, and a person of ordinary skill in the art will understand that modifications can be made to these embodiments without departing from the principle and spirit of the general invention conception. Therefore, the scope of the present invention shall be defined by the claims and equivalents of the claims.

## Claims

1. A three-way valve for flow mixing and flow division, comprising:
a valve cover (10), wherein the bottom of the valve cover is provided with a first port (B) connected to a valve cavity (150) of the three-way valve; and
a valve body (120), wherein the valve body is connected to the valve cover in a sealed manner and is provided above the valve cover, and left and right sides of the valve body are provided with a second port (AB) and a third port (A) that are connected to the valve cavity (150);
the three-way valve further comprising:
a valve core component (70), wherein the valve core component is connected to the valve cover (10) in a fixed manner;
a valve seat component (50, 80), wherein the valve seat component is provided inside the valve cavity and is capable of fitting with the valve core component; and
a valve rod component (110), wherein the valve rod component is connected to the valve seat component, and drives the valve seat component to move up and down in the valve cavity, so as to implement a flow rate variation, and opening and closing of the three-way valve.

2. The three-way valve according to claim 1, comprising a support rod (20) connecting the valve seat components (50) and (80) to the valve cover (10).

3. The three-way valve according to claim 2, comprising a support rod (20) connecting the valve seat components (50) and (80) to the valve cover (10).

4. The three-way valve according to claim 2, where the one end of the support rod (20) connects the valve seat components (50) and (80) and the other the other end is connected to a support member (76) of the valve cover in a fixed manner.

5. The three-way valve according to any one of claims 1 to 4, wherein
the valve seat component (50, 80) comprises an upper valve seat (80) and a lower valve seat (50) that are connected to each other by using a connecting rod (90), and the upper valve seat and the lower valve seat are separately located above and below the valve core component.

6. The three-way valve according to claim 5, wherein
the connecting rod (90) and the lower valve seat (50) are connected by means of screw-thread fit, and the connecting rod and the upper valve seat are fastened by using a fastening nut.

7. The three-way valve according to claim 6, wherein
an inner side of an outer surface of the connecting rod (90) contacts an outer edge of the valve core connector (73).

8. The three-way valve according to any one of claims 5 to 7, wherein
the upper valve seat is connected to a valve rod in the valve rod component by using a connecting plate (100), and seal surfaces of the connecting plate and the upper valve seat are sealed by using a non-asbestos pad.

9. The three-way valve according to claim 8, wherein
the connecting plate (100) is provided with a fan-shaped flow channel opening for a medium to pass through, the center of the connecting plate is provided with a through-hole, and after the valve rod (110) penetrates the through-hole, a nut is used to fit with a thread at an end of the valve rod to implement fastening.

10. The three-way valve according to any one of claims 1 to 9, wherein
a partition plate of the valve body component and an inner wall of the valve cover are sealed by using a first O-shaped seal ring.

11. The three-way valve according to claim 10, wherein
a connection position between the partition plate and the inner wall is provided with a guiding groove (11), and a guiding ring (40) is mounted inside the guiding groove.

12. The three-way valve according to any one of claims 2 to 11, wherein
outer contours of the upper valve core are formed such that a flow curve of the second port is a logarithmic curve, and/or outer contours of the lower valve core are formed such that a flow curve of the first port is a linear curve.
